# EUROPÄISCHE PATENTANMELDUNG

(11) **EP 3 156 591 A1**
(43) Veröffentlichungstag der Anmeldung: **19.04.2017**
(21) Anmeldenummer: 16184208.3
(22) Anmeldetag: 15.08.2016
(51) Int. Cl.: F01D 5/04, B22F 3/105, B23P 15/00, F01D 5/14, F01D 5/34, F04D 29/22, B23K 26/342

(54) **TURBINENLAUFRAD FÜR EINE RADIALTURBINE**

(30) Priorität: 14.10.2015 DE 102015117463
(71) Anmelder: Atlas Copco Energas GmbH, 50999 Köln (DE)
(72) Erfinder: Schwarz, Lukas, 50999 Köln (DE)
(74) Vertreter: Lorenz, Bernd Ingo Thaddeus

(57) **Zusammenfassung**

Die Erfindung betrifft ein Turbinenlaufrad für eine Radialturbine mit einer rotationssymmetrischen Grundplatte (1) und einem durch eine Nabenscheibe (2) und eine Deckscheibe (3) begrenzten Strömungsraum (4), der eine axiale innere Öffnung (5) mit einer radialen äußeren Öffnung (6) verbindet und durch Turbinenschaufeln (7) in Strömungskanäle (8) unterteilt ist. Die Erfindung betrifft auch ein Verfahren zum Fertigen eines solchen Turbinenlaufrades. Erfindungsgemäß sind zumindest die Nabenscheibe (2), die Turbinenschaufeln (7) und die Deckplatte (3) einstückig durch additive Fertigungsverfahren an die Grundplatte (1) angeformt.

## Beschreibung

Die Erfindung betrifft ein Turbinenlaufrad für eine Radialturbine mit einer rotationssymmetrischen Grundplatte und einem durch eine Deckscheibe und eine Nabenscheibe begrenzten Strömungsraum, der eine axiale innere Öffnung mit einer radialen äußeren Öffnung verbindet und durch Turbinenschaufeln in Strömungskanäle unterteilt ist. Die Erfindung betrifft auch ein Verfahren zum Fertigen eines solchen Turbinenlaufrades.

Derartige geschlossene Turbinenlaufräder, sogenannte Deckscheibenläufer, haben den Vorteil, dass das durch die Turbine geführte Medium durch dessen Inneres strömt, ohne mit den Außenwänden der Turbine in Berührung kommen zu können. Dies lässt größere Spaltbreiten zwischen dem Turbinenlaufrad und dem Turbinengehäuse zu, so dass auch größere thermische Ausdehnungen problemlos und ohne Effizienzeinbußen ausgeglichen werden können.

Üblicherweise werden Turbinenlaufräder durch spanende Bearbeitung hergestellt. Hierbei ergeben sich jedoch Einschränkungen bezüglich der herstellbaren Geometrie des Turbinenlaufrades. So lassen sich Fräswerkzeuge nicht beliebig tief in einen geschlossenen Strömungsraum hineinbewegen und in diesem manövrieren. Dies schließt - insbesondere bei kleinen Turbinenlaufrädern - aufwändige Gestaltungen bei aus dem Vollblock hergestellten Deckscheibenläufern aus.

Daher ist man bisher darauf angewiesen, die Nabenscheibe mit darauf angeordneten Turbinenschaufeln offen vorzufertigen und darauf eine fertige Deckscheibe aufzusetzen. Diese nachträgliche Befestigung ist jedoch in hohem Maße nachteilig, aufgrund hoher Kerbwirkung und der Materialschwächung, die beim Fügen der Deckscheibe entsteht. Weiterhin muss zusätzliche Masse an dem Turbinenlaufrad aufgewendet werden und es können sich überdies zusätzliche Fertigungstoleranzen ergeben.

Vor diesem Hintergrund liegt der Erfindung die Aufgabe zugrunde, ein geschlossenes Turbinenlaufrad mit geringerer Masse und erhöhter Präzision bereitzustellen.

Gegenstand der Erfindung und Lösung dieser Aufgabe ist ein Turbinenlaufrad nach Anspruch 1 sowie ein Verfahren nach Anspruch 13.

Das gattungsgemäße Turbinenlaufrad ist für eine Radialturbine vorgesehen, bei der das Arbeitsmedium radial zur Drehachse des Turbinenlaufrades strömt. Die erfindungsgemäße Lehre ist auch auf andere radial durchströmte Strömungsmaschinen wie Radiallüfter, -pumpen und -verdichter anwendbar. Das Laufrad weist eine rotationssymmetrische Grundplatte auf, wobei die Grundplatte einen rotationssymmetrischen Grundkörper aufweist, an dem jedoch auch rotationsperiodisch angeordnete oder ausgebildete Anschlusseinrichtungen - wie beispielsweise Bohrungen oder eine Hirth-Verzahnung - vorgesehen sein können. Durch eine Deckscheibe und eine Nabenscheibe wird ein Strömungsraum begrenzt, der eine axiale innere Öffnung mit einer radialen äußeren Öffnung verbindet. Nabenscheibe und Deckscheibe begrenzen den Strömungsraum in axialer Richtung und sind zweckmäßiger Weise mit einer gleichmäßigen Stärke ausgebildet. Der Strömungsraum ist durch Turbinenschaufeln in Strömungskanäle unterteilt.

Erfindungsgemäß sind zumindest die Nabenscheibe, die Turbinenschaufeln und die Deckplatte einstückig durch additive Fertigungsverfahren an die Grundplatte angeformt. Bei einem solchen Verfahren wird Material lokal aus einem - beispielsweise pulverförmigen - Rohmaterial zusammengefügt, um eine gewünschte Form zu erhalten. Dazu zählen insbesondere selektive Schmelz- und Sintertechniken, wie beispielsweise selektives Laserschmelzen (SLM) und selektives Lasersintern (SLS), die sich insbesondere auch zur Erzeugung metallischer Strukturen aus Metallpulver eignen. Derartig hergestellte Formteile unterscheiden sich strukturell von durch Schmieden und/oder spanende Bearbeitung hergestellte Formteilen. Insbesondere sind keine Fügestellen - wie beispielsweise beim Schweißen - vorhanden. Hierdurch lässt sich eine große Homogenität des erzeugten Werkstücks erzielen. Weiterhin lassen sich durch additive Fertigungsmethoden auch Formen erzeugen, die durch ihre spezielle Formgebung - beispielsweise Hinterschneidungen - durch andere Fertigungsverfahren nicht herstellbar sind.

Vorzugsweise verlaufen die Turbinenschaufeln jeweils bis zur äußeren radialen Öffnung des Strömungsraumes. Dabei sind die durch jeweils zwei Turbinenschaufeln abgegrenzten Strömungskanäle durch zumindest eine Zwischenwand, welche sich ebenfalls bis zur äußeren radialen Öffnung des Strömungsraumes erstreckt, in eine Mehrzahl von Teilkanälen unterteilt. Nach innen reichen die Zwischenwände nicht so weit wie die Turbinenschaufeln, die vorzugsweise bis zur inneren axialen Öffnung des Strömungsraumes verlaufen. Durch die Anordnung der Zwischenwände kann der Aufweitung der Strömungskanäle in radialer Richtung dadurch entgegengewirkt werden, dass diese in Teilkanäle unterteilt sind. Der kleinere Querschnitt der Teilkanäle ist vorteilhaft bei der Strömungsführung der Turbine ebenso wie für die erfindungsgemäße Herstellung, da sich bei additiver Fertigung kleinere Überhänge leichter ohne zusätzliche - später aufwendig zu entfernende - Stützkonstruktionen herstellen lassen.

Zweckmäßigerweise ist die umlaufende äußere radiale Öffnung des Strömungsraumes durch eine Vielzahl von Mündungsöffnungen der Strömungskanäle und/oder der Teilkanäle gebildet. Die einzelnen Mündungsöffnungen werden randseitig durch die Grundplatte, die Deckscheibe und durch Wandflächen begrenzt, welche durch die außenseitigen Enden der Turbinenschaufeln und/oder der Zwischenwände gebildet werden.

Vorteilhaft gehen in diesen Mündungsöffnungen die Wandflächen in einen gerundeten Übergang in die Deckscheibe über. Der Innenquerschnitt der Strömungskanäle bzw. der Teilkanäle setzt den Querschnitt der Mündungsöffnungen vorzugsweise kontinuierlich fort.

In einer besonders bevorzugten Ausgestaltung wird durch die Deckscheibe und der Wandflächen ein Kreisbogensegment, insbesondere ein Halbkreis, gebildet. Dabei kann der Radius des Halbkreises insbesondere an den Radius angepasst sein, welcher durch das eingesetzte additive Fertigungsverfahren ohne Stützkonstruktionen gebildet werden kann. Hierdurch entfallen temporäre Stützstrukturen innerhalb der Strömungskanäle und der Teilkanäle, welche sonst unter großem Aufwand entfernt werden müssten. Das Turbinenlaufrad ist nach der Fertigstellung somit unmittelbar und ohne weitere Nachbehandlungen einsetzbar.

Vorzugsweise hat die Grundplatte eine zentrale Nabendurchführung zur Aufnahme einer Welle. Hieran anschließend weist das Turbinenlaufrad einen hülsenförmigen zentralen Abschnitt auf, der sich bis an die Grundplatte erstreckt und an die Nabendurchführung anschließt. Auf der von der Grundplatte abgewandten Seite führt der zentrale Abschnitt bis zu einem flanschförmigen Abschnitt innerhalb der inneren zentralen Öffnung des Strömungsraumes. Der zentrale Abschnitt, die Nabenscheibe und die Grundplatte umschließen einen Hohlraum. Durch den Hohlraum kann beim Bau des Turbinenlaufrades Material eingespart werden, was einerseits die Herstellungskosten senkt und andererseits auch die Verwendungseigenschaften (durch eine reduzierte Masse, durch welche sich die Belastung durch Fliehkraft verringert, sowie ein reduziertes Trägheitsmoment) verbessert. Um bei additiven Fertigungsverfahren, welche das Produkt aus losen Schüttungen eines pulverförmigen Werkstoffs herstellen, nicht verwendetes Pulvermaterial aus dem Innern des Hohlraums entfernen zu können, weist dieser zweckmäßigerweise Öffnungen auf, die jedoch nicht mit dem Strömungsraum in Verbindung stehen. Vorteilhafterweise münden die Öffnungen in die Flanschfläche, die im montierten Zustand des Turbinenlaufrades durch einen Wellenabschnitt oder ein Befestigungsmittel abgedeckt ist.

In einer bevorzugten Ausgestaltung sind in dem Hohlraum Kraftleitrippen angeordnet, die sich vom zentralen Abschnitt zu der vom Strömungsraum abgewandten, den Hohlraum umfassenden Rückseite der Nabenscheibe erstrecken. Die Kraftleitrippen weisen üblicherweise eine Wandstärke von etwa 0,5 % bis 1 %, vorzugsweise etwa 0,6 % des Außendurchmessers auf und erstrecken sich über 25 % bis 50 %, vorzugsweise etwa 30 % der Höhe des Hohlraumes in Längsrichtung der Achse. Trotzdem sind sie ausreichend, um die bei hohen Drehzahlen auftretenden Zentrifugalkräfte sicher abzuleiten, ohne dass hierbei ein wesentlicher Materialeinsatz notwendig ist. Die Kraftleitrippen gehen überdies vorteilhafterweise auch in die Grundplatte über.

In einer besonders bevorzugten Ausgestaltung sind die Kraftleitrippen jeweils durch zwischen in Kraftleitungsrichtung verlaufenden Stegen angeordneten Aussparungen unterbrochen. Hierdurch kann weitere Materialersparnis erzielt werden.

In einer weiteren vorteilhaften Ausgestaltung der Erfindung sind zumindest einzelne Turbinenschaufeln und/oder Zwischenwände des Turbinenlaufrades geneigt. Darunter ist zu verstehen, dass bei einem Schnitt durch eine zylinderförmige, mit der Drehachse des Turbinenlaufrades konzentrische Fläche eine Neigung gegenüber einer parallelen zur Drehachse vorliegt. Die Neigung kann insbesondere auch lediglich Abschnittsweise vorliegen, so dass beispielsweise eine Turbinenschaufel nur an ihrem inneren oder äußeren Ende geneigt, am anderen Ende jedoch gerade ist. Durch die Neigung der Schaufeln lassen sich einerseits die strömungstechnischen Eigenschaften des zugehörigen Strömungskanals bzw. Teilkanals verbessern und darüber hinaus die Torsionssteifigkeit des Turbinenlaufrades steigern. Derartige Turbinengeometrien sind bei konventionellen Laufrädern nicht darstellbar.

In einer besonders bevorzugten Ausgestaltung sind die Turbinenschaufeln und gegebenenfalls Zwischenwände so geneigt, dass die Mündungsöffnungen der Strömungskanäle durch abwechselnd geneigte und achsparallel ausgerichtete Wandflächen begrenzt sind. Hierbei hat sich eine besonders hohe Torsionssteifigkeit bei gleichzeitig günstigen Strömungseigenschaften gezeigt.

Bevorzugt sind die in radialer Richtung zwischen der inneren Öffnung und der äußeren Öffnung verlaufenden Strömungskanäle in Umfangsrichtung geschwungen.

Besonders bevorzugt ist das innenseitige Ende einer Turbinenschaufel gegenüber seinem außenseitigen Ende um zumindest 45° vorzugsweise zumindest 60° in Umfangsrichtung versetzt. Derartige Deckscheibenläufer sind für die Strömungseigenschaften besonders vorteilhaft, lassen sich jedoch mit herkömmlichen Fertigungsmethoden nicht einstückig herstellen.

Gegenstand der Erfindung ist auch ein Verfahren zum Fertigen eines Turbinenlaufrades für eine Radialturbine mit einer rotationssymmetrischen Grundplatte und einem durch eine Deckscheibe und eine Nabenscheibe begrenzten Strömungsraum, der eine axiale innere Öffnung mit einer radialen äußeren Öffnung verbindet und durch Turbinenschaufeln in Strömungskanäle unterteilt ist. Erfindungsgemäß wird zunächst die Grundplatte geformt und anschließend zumindest die Nabenscheibe, die Turbinenschaufeln und die Deckplatte einstückig durch additive Fertigungsmethoden an die Grundplatte aufgebracht. Zweckmäßigerweise beinhaltet die Fertigung der rotationssymmetrischen Grundplatte zumindest einen spanenden Bearbeitungsschritt.

Vorzugsweise handelt es sich bei dem additiven Fertigungsverfahren um selektives Laserschmelzen oder selektives Lasersintern.

In einer bevorzugten Ausgestaltung wird die Grundplatte durch Drehen einer geschmiedeten Ronde gefertigt. Geschmiedete Metallteile weisen eine besonders hohe Festigkeit auf und lassen sich gut in einfachen Grundformen herstellen. Durch das Drehen wird eine hohe Rotationssymmetrie des Grundkörpers der Grundplatte erreicht. Auf diese Weise kann die Grundplatte auf konventionellen Wege besonders einfach und günstig vorgefertigt werden.

Die Erfindung wird anhand der nachfolgenden Zeichnungen erläutert. Es zeigen schematisch:
- Fig. 1: perspektivische Darstellung eines erfindungsgemäßen teilweise aufgeschnittenen Turbinenlaufrades,
- Fig. 2: Aufsicht auf ein erfindungsgemäßes Turbinenlaufrad entlang der Drehungsachse,
- Fig.3A: Seitenansicht eines teilweise aufgeschnittenen Turbinenlaufrades gemäß einer ersten Ausführungsform,
- Fig. 3B: Detailansicht der Mündungsöffnungen in dem Ausführungsbeispiel nach den Figuren 1 bis 3A,
- Fig. 4A: Die Ansicht aus Figur 3A bei einer alternativen Ausführungsform und
- Fig. 4B: Detailansicht der Mündungsöffnung gemäß dem Ausführungsbeispiel nach Figur 4A.

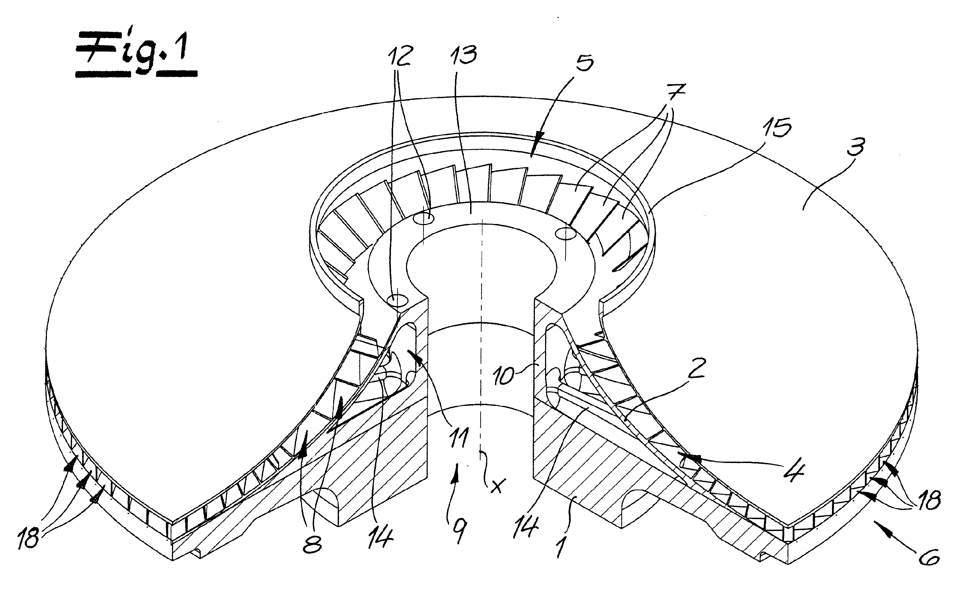

Die Figur 1 zeigt ein erfindungsgemäßes Turbinenlaufrad mit einer um eine Drehachse x rotationssymmetrischen Grundplatte. Hierauf ist ein durch eine Nabenscheibe 2 und eine Deckscheibe 3 begrenzter Strömungsraum 4 angeordnet. Dieser verbindet eine axiale innere Öffnung 5 mit einer radialen umlaufenden äußeren Öffnung 6 des Turbinenlaufrades. An den radialen Schnittflächen kann man erkennen, dass sowohl die Deckscheibe als auch die Nabenscheibe im Verlauf von innen nach außen im Wesentlichen mit konstanter Dicke ausgebildet sind. Die Nabenscheibe 2 weist eine größere Stärke als die Deckscheibe 3 auf und geht im radial äußeren Bereich in die Grundplatte 1 über. Der Strömungsraum 4 ist durch Turbinenschaufeln 7 in Strömungskanäle 8 unterteilt.

Erfindungsgemäß sind die Nabenscheibe 2, die Turbinenschaufeln 7 und die Deckplatte 3 einstückig durch additive Fertigungsverfahren an die Grundplatte 1 angeformt.

Die Grundplatte 1 weist eine zentrale Nabendurchführung 9 auf, an die ein hülsenförmiger zentraler Abschnitt 10 des Turbinenlaufrades anschließt. Der zentrale Abschnitt 10, die Nabenscheibe 2 und die Grundplatte 1 umschließen einen Hohlraum 11. Dieser weist Öffnungen 12 auf, die an einem flanschförmigen Abschnitt 13 angeordnet sind, der durch das axiale Ende des zentralen Abschnitts 10 und der Nabenscheibe 2 gebildet ist und sich innerhalb der inneren axialen Öffnung 5 des Strömungsraumes befindet.

Innerhalb des Hohlraumes 11 sind Kraftleitrippen 14 angeordnet, die sich vom zentralen Abschnitt 10 zu der vom Strömungsraum 4 abgewandten, den Hohlraum 11 umfassenden Rückseite der Nabenscheibe 2 erstrecken.

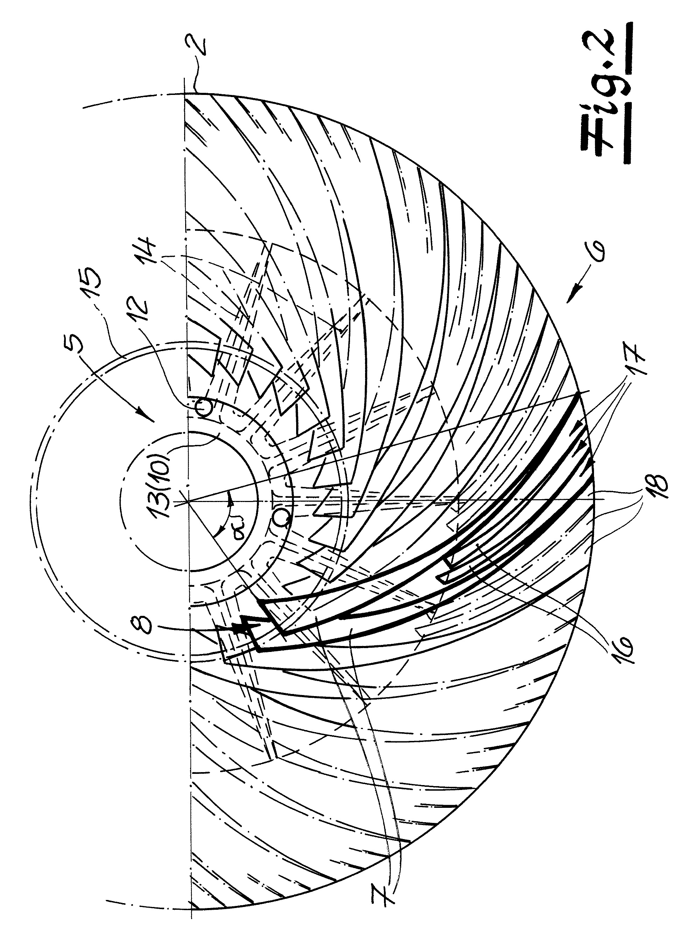

Zur Verbesserung der Übersichtlichkeit ist in der Figur 2 die den Strömungsraum 4 in axialer Draufsicht sonst verdeckende Deckscheibe 3 nicht dargestellt. Zur Orientierung ist lediglich der die axiale innere Öffnung 5 einfassende Ring 15 strichpunktiert angedeutet. In der Ansicht sind die durch Turbinenschaufeln 7 begrenzten Strömungskanäle 8 erkennbar. Zum besseren Verständnis ist ein einzelner, beliebig ausgewählter Strömungskanal hervorgehoben dargestellt und mit Bezugszeichen versehen. Die übrigen Turbinenschaufeln sind lediglich strichpunktiert angedeutet.

Der Strömungskanal 8 ist außenseitig durch zwei Turbinenschaufeln 7 begrenzt. Diese erstrecken sich von der inneren axialen Öffnung 5 bis zur äußeren radialen Öffnung 6 des Strömungsraumes. In einem radial äußeren Abschnitt, der in etwa die Hälfte des Verlaufs des Strömungskanals 8 ausmacht, ist dieser durch zwei Zwischenwände 16 in insgesamt drei Teilkanäle 17 unterteilt. Hierdurch wird erreicht, dass die Ausdehnung der Teilkanäle 17 in Umfangsrichtung an der äußeren Öffnung 6 in etwa so groß ist wie die Ausdehnung des Strömungskanals 8 an der inneren Öffnung 5. Der Figur ist zu entnehmen, dass sowohl die Turbinenschaufeln 7 als auch die Zwischenwände 16 an ihren jeweiligen inneren Ende gegenüber der Drehachse x geneigt sind. Im Gegensatz hierzu sind sie an ihrem außenseitigen Ende an der radialen äußeren Öffnung 6 achsparallel, das heißt gerade, ausgerichtet. Die Turbinenschaufeln 7 und die Zwischenwände 16 sind in ihrem Verlauf bogenförmig geschwungen. Der Versatz α zwischen dem innenseitigen Ende einer Turbinenschaufel 7 und deren außenseitigen Ende beträgt vorliegend in etwa 60°. In der Figur sind ferner die in den Hohlraum 11 mündenden Öffnungen 12 zu sehen. Die im Hohlraum angeordneten, durch die Nabenscheibe 2 größtenteils verdeckten Kraftleitrippen 14 sind lediglich gestrichelt angedeutet. Aus einer vergleichenden Betrachtung der Figuren 1 und 2 ist zu entnehmen, dass in diesem Ausführungsbeispiel die Kraftleitrippen 14 sich vom zentralen Abschnitt 10 und der Grundplatte 1 weg jeweils verjüngend ausgebildet sind.

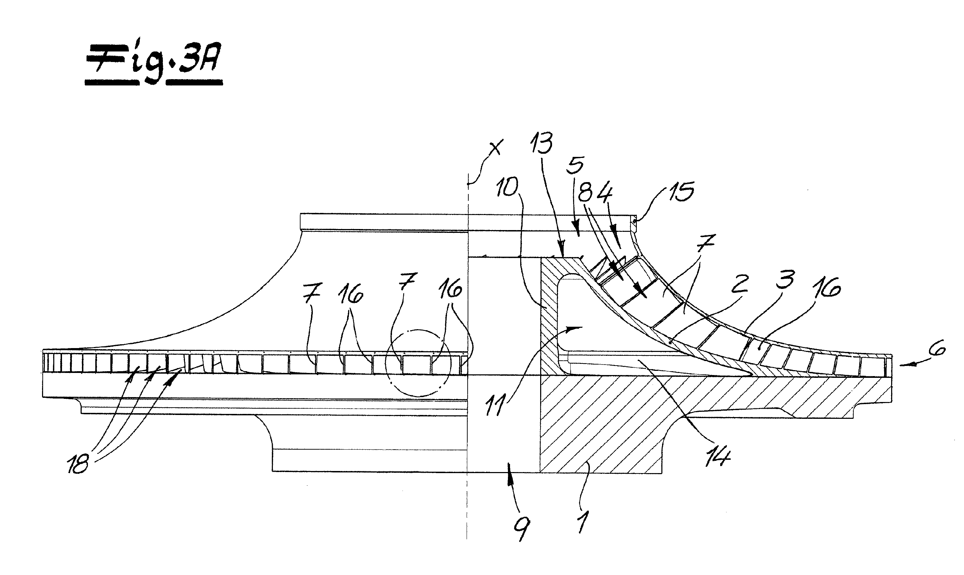

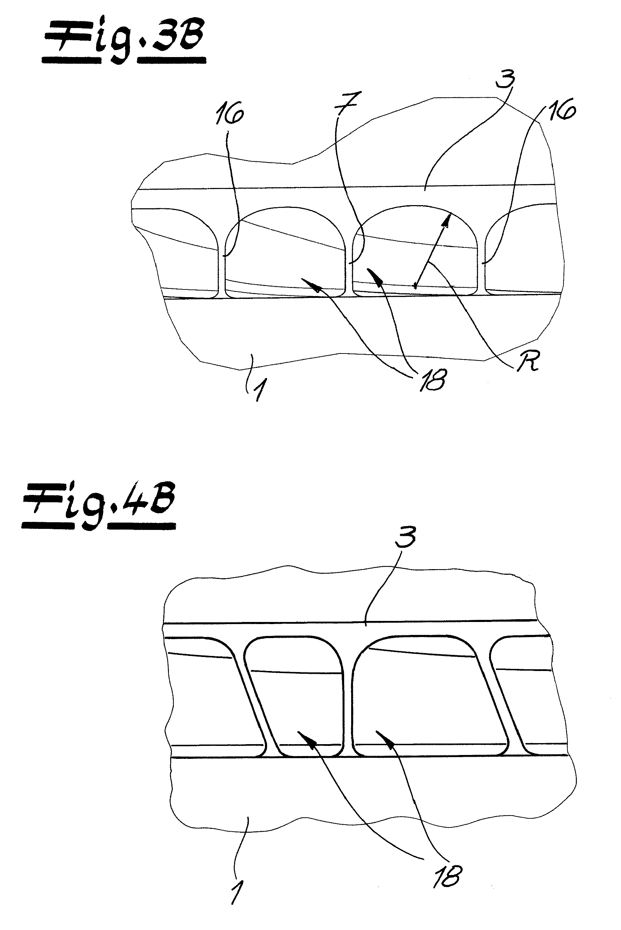

In der Figur 3A ist das Turbinenlaufrad gemäß der in den Figuren 1 und 2 gezeigten Ausführungsform in einer seitlichen Ansicht dargestellt. Dabei ist die rechte Hälfte entlang einer radialen Ebene aufgeschnitten. In der linken Hälfte ist erkennbar, dass die umlaufende äußere radiale Öffnung 6 des Strömungsraumes 4 durch eine Vielzahl von Mündungsöffnungen 18 der Strömungskanäle 8 bzw. der Teilkanäle 17 gebildet ist. Die einzelnen Mündungsöffnungen 18 werden an ihrem Umfang durch die Grundplatte 1, die Deckscheibe 3, sowie durch Wandflächen begrenzt, die durch die außenseitigen Enden der Turbinenschaufeln 7 und/oder der Zwischenwände 16 gebildet werden. Wie man dem vergrößerten Ausschnitt in der Figur 3B entnehmen kann, gehen die Wandflächen in einem gerundeten Übergang in die Deckscheibe 3 über. Dabei setzt sich der Querschnitt der Mündungsöffnungen 18 kontinuierlich in den Innenquerschnitt der Teilkanäle 17 kontinuierlich fort. Der Übergang zwischen der Deckscheibe 3 und den Wandflächen wird durch ein Kreisbogensegment mit dem Radius R gebildet. Der Radius R beträgt dabei das Maximum eines durch das eingesetzte additive Fertigungsverfahren herstellbaren Überhangs ohne Stützkonstruktionen.

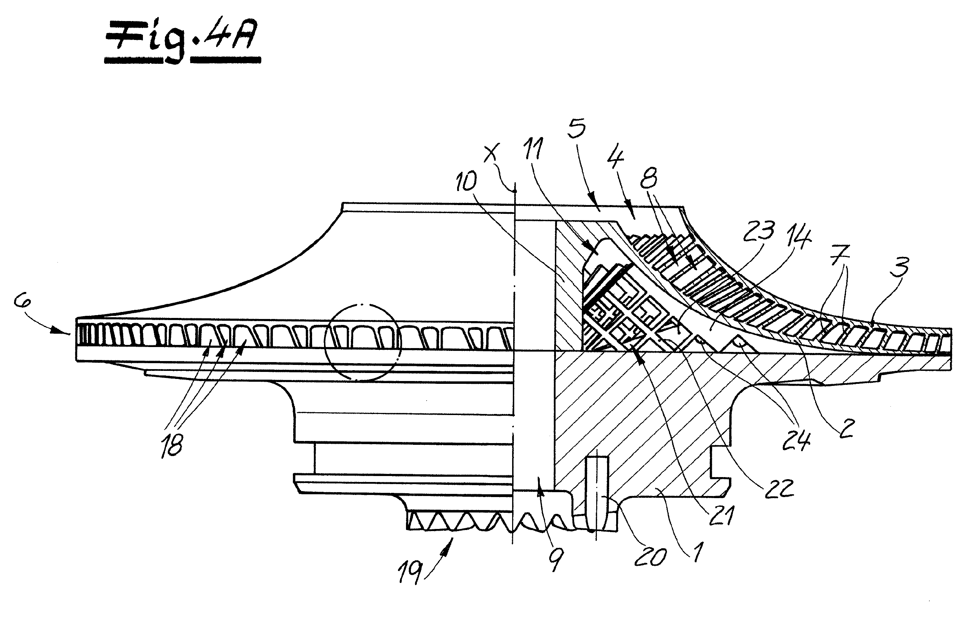

Eine Alternative Ausführungsform, welche mehrere voneinander unabhängige Teilgestaltungen zusammenfasst, ist in den Figuren 4A und 4B dargestellt. Die im Wesentlichen rotationssymmetrische Grundplatte 1 weist an ihrem von dem Strömungsraum 4 beabstandeten Ende eine Hirthverzahnung 19 zur sicheren Kupplung an eine Welle auf. Ferner ist in der geschnittenen Hälfte eine Bohrung 20 zur Aufnahme einer Befestigungsschraube erkennbar. Die in dem ausgeschnittenen Hohlraum 11 angeordneten Kraftleitrippen 14 sind in dieser alternativen Ausgestaltung als flächenartige Elemente mit gleichmäßiger Stärke ausgebildet. Dabei sind in den Kraftleitrippen 14 Aussparungen 21 vorgesehen, welche in Kraftleitungsrichtung verlaufende Stege 22 übrig lassen. Ferner ist sichtbar, dass zwischen den Kraftleitrippen 14 alternierend Zusatzrippen 23 vorhanden sind, die sich von der Grundplatte 1 dreieckförmig an die Rückseite der Nabenscheibe 2 erstrecken und von runden Aussparungen 24 unterbrochen sind. Bei einer vergleichenden Betrachtung der linken Hälfte der Figur 4A mit der Figur 4B - die einen vergrößerten Ausschnitt der äußeren Öffnung 6 zeigt - entnimmt man, dass die Turbinenschaufeln und die Zwischenwände so geneigt sind, dass die Mündungsöffnungen der Strömungskanäle 18 durch abwechselnd geneigte und achsparallel ausgerichtete Wandflächen begrenzt sind. Nichtsdestotrotz sind die Übergange zwischen den Wandflächen und der Deckscheibe gerundet ausgebildet.

## Patentansprüche

1. Turbinenlaufrad für eine Radialturbine mit einer rotationssymmetrischen Grundplatte (1) und einem durch eine Nabenscheibe (2) und eine Deckscheibe (3) begrenzten Strömungsraum (4), der eine axiale innere Öffnung (5) mit einer radialen äußeren Öffnung (6) verbindet und durch Turbinenschaufeln (7) in Strömungskanäle (8) unterteilt ist, **dadurch gekennzeichnet, dass** zumindest die Nabenscheibe (2), die Turbinenschaufeln (7) und die Deckplatte (3) einstückig durch additive Fertigungsverfahren an die Grundplatte (1) angeformt sind.

2. Turbinenlaufrad nach Anspruch 1, **dadurch gekennzeichnet, dass** die durch jeweils zwei bis zur äußeren radialen Öffnung (6) des Strömungsraumes (4) verlaufende Turbinenschaufeln (7) abgegrenzten Strömungskanäle (8) durch zumindest eine Zwischenwand (16), welche sich bis zur äußeren radialen Öffnung (6) des Strömungsraumes (4) erstreckt, in einem radial außenliegenden Bereich in eine Mehrzahl von Teilkanälen (17) unterteilt sind.

3. Turbinenlaufrad nach einem der Ansprüche 1 oder 2, **dadurch gekennzeichnet, dass** die äußere radiale Öffnung (6) des Strömungsraumes (4) durch eine Vielzahl von Mündungsöffnungen (18) der Strömungskanäle (8) und/oder der Teilkanäle (17) gebildet wird, wobei die Mündungsöffnungen (18) durch die Grundplatte (1), die Deckscheibe (3) und durch Wandflächen, welche durch Turbinenschaufeln (7) und/oder Zwischenwände (16) gebildet werden, begrenzt sind.

4. Turbinenlaufrad nach Anspruch 3, **dadurch gekennzeichnet, dass** in den Mündungsöffnungen (18) die Wandflächen in einem gerundeten Überhang in die Deckscheibe (3) übergehen.

5. Turbinenlaufrad nach Anspruch 4, **dadurch gekennzeichnet, dass** durch die Deckscheibe (3) und die Zwischenwände ein Kreisbogensegment, insbesondere ein Halbkreis, gebildet wird.

6. Turbinenlaufrad nach einem der Ansprüche 1 bis 5, **dadurch gekennzeichnet, dass** die Grundplatte (1) eine zentrale Nabendurchführung (9) zur Aufnahme einer Welle aufweist, dass das Turbinenlaufrad einen hülsenförmigen zentralen Abschnitt (10) aufweist, der sich bis an die Grundplatte (1) erstreckt und an die Nabendurchführung (9) anschließt und dass der zentrale Abschnitt (10), die Nabenscheibe (2) und die Grundplatte (1) einen Hohlraum (11) umschließen.

7. Turbinenlaufrad nach Anspruch 6, **dadurch gekennzeichnet, dass** in dem Hohlraum (11) Kraftleitrippen (14) angeordnet sind, die sich vom zentralen Abschnitt (10) zu der Nabenscheibe (2) erstrecken.

8. Turbinenlaufrad nach Anspruch 7, **dadurch gekennzeichnet, dass** die Kraftleitrippen (14) jeweils durch zwischen in Kraftleitungsrichtung verlaufenden Stegen (22) angeordnete Aussparungen (21) unterbrochen sind.

9. Turbinenlaufrad nach einem der Ansprüche 1 bis 8, **dadurch gekennzeichnet, dass** zumindest einzelne der Turbinenschaufeln (7) und/oder Zwischenwände (16) geneigt sind.

10. Turbinenlaufrad nach Anspruch 9, **dadurch gekennzeichnet, dass** die Turbinenschaufeln (7) und ggf. Zwischenwände (16) so geneigt sind, dass die Mündungsöffnungen (18) der Strömungskanäle (8,17) durch abwechselnd geneigte und achsparallel ausgerichtete Wandflächen begrenzt werden.

11. Turbinenlaufrad nach einem der Ansprüche 1 bis 10, **dadurch gekennzeichnet, dass** die in radialer Richtung zwischen der inneren Öffnung (5) und der äußeren Öffnung (6) verlaufenden Strömungskanäle (7) in Umfangsrichtung geschwungen sind.

12. Turbinenlaufrad nach Anspruch 11, **dadurch gekennzeichnet, dass** das innenseitige Ende einer der Turbinenschaufeln (7) gegenüber seinem außenseitigen Ende um einen Winkel α von zumindest 45°, vorzugsweise zumindest 60° in Umfangsrichtung versetzt ist.

13. Verfahren zum Fertigen eines Turbinenlaufrades für eine Radialturbine, insbesondere nach Anspruch 1 bis 12, mit einer rotationssymmetrischen Grundplatte (1) und einem durch eine Nabenscheibe (2) und eine Deckscheibe (3) begrenzten Strömungsraum (4), der eine axiale innere Öffnung (5) mit einer radialen äußeren Öffnung (6) verbindet und durch Turbinenschaufeln (7) in Strömungskanäle (8) unterteilt ist, wobei zunächst die Grundplatte (1) geformt wird und anschließend zumindest die Nabenscheibe (2), die Turbinenschaufeln (7) und die Deckplatte (3) einstückig durch additive Fertigungsmethoden an die Grundplatte (1) aufgebracht werden.

14. Verfahren nach Anspruch 13, **dadurch gekennzeichnet, dass** es sich bei dem additiven Fertigungsverfahren um selektives Laserschmelzen oder selektives Lasersintern handelt.

15. Verfahren nach Anspruch 13 oder 14, **dadurch gekennzeichnet, dass** die Grundplatte (1) durch Drehen aus einer geschmiedeten Ronde gefertigt wird.
